Europäisches Patentamt

European Patent Office

Office européen des brevets

(19)

(11) Numéro de publication : **0 132 187 B1**

(12) # FASCICULE DE BREVET EUROPÉEN

(45) Date de publication du fascicule du brevet :
07.09.88

(21) Numéro de dépôt : **84401413.4**

(22) Date de dépôt : **03.07.84**

(51) Int. Cl.⁴ : **G 01 N 29/04**

(54) **Procédé de détection de défauts, notamment internes, tels que fissures dans des joints soudés.**

(30) Priorité : **19.07.83 FR 8311911**

(43) Date de publication de la demande :
**23.01.85 Bulletin 85/04**

(45) Mention de la délivrance du brevet :
**07.09.88 Bulletin 88/36**

(84) Etats contractants désignés :
**AT BE CH DE GB IT LI LU NL SE**

(56) Documents cités :
**EP-A- 0 014 820**
**DE-C- 971 993**
**FR-A- 2 093 406**
**FR-A- 2 136 491**
**FR-A- 2 391 471**
**FR-A- 2 480 436**
**GB-A- 664 763**
**US-A- 3 685 348**

(73) Titulaire : **GAZ DE FRANCE**
**23, rue Philibert Delorme**
**F-75017 Paris (FR)**

(72) Inventeur : **Capdevielle, Jean-Pierre Georges**
**27 rue des Sezières**
**F-92700 Colombes (FR)**

(74) Mandataire : **Durand, Yves Armand Louis et al**
**Cabinet Z. Weinstein 20, Avenue de Friedland**
**F-75008 Paris (FR)**

EP 0 132 187 B1

Jouve, 18, rue St-Denis, 75001 Paris, France

## Description

La présente invention concerne essentiellement un procédé de détection de défauts, notamment internes, tels que fissures dans des joints soudés.

Plus précisément, l'invention concerne un procédé de détection de défauts, notamment internes, tels que fissures, de part et d'autre de chaque interface métal de base/métal d'apport, ou zone de liaison, formée par la soudure d'une première pièce métallique, à une deuxième pièce métallique, à l'aide d'un métal d'apport de soudure approprié.

Jusqu'à présent, le contrôle de telles interfaces ou zones de liaison de joints soudés, notamment les joints soudés en T, en particulier de métaux de base contenant de 5 % à 10 % de nickel, était effectué par ressuage.

Cette méthode n'offre pas une fiabilité constante et ne se prête pas à la réalisation de cadences de contrôle élevées.

On a tenté de détecter les défauts, notamment internes, tels que fissures, par l'emploi d'ondes ultrasonores transversales à une fréquence comprise entre 1 et 5MHz. Les ondes ultrasonores transversales traversent l'interface métal de base/métal d'apport dans le cas de structure non austénitiques ou non dendritiques.

Par contre, dans le cas de structures austénitiques ou dendritiques du métal, les ondes ultrasonores transversales se révèlent incapables de traverser l'interface métal de base/métal d'apport, sans perturbations.

La présente invention a donc pour but de résoudre le nouveau problème technique constitué par la détection de défauts, notamment internes, tels que fissures, de part et d'autre de chaque interface métal de base/métal d'apport de pièces métalliques à structure austénitique ou dendritique d'une manière simple, fiable permettant de détecter des défauts internes ou proches de la surface ou même de surface colmatés par le meulage entre-passe et à une cadence de contrôle élevée. Plus généralement, l'invention a pour objet de trouver une solution permettant de détecter les défauts de part et d'autre de l'interface métal de base/métal d'apport pour d'autres types de métaux.

Ce nouveau problème technique a été résolu pour la première fois par la demanderesse en découvrant de manière inattendue que des ondes ultrasonores longitudinales sont capables de traverser l'interface métal de base/métal d'apport, ou zone de liaison, formée par la soudure d'une première pièce métallique, à une deuxième pièce métallique, à l'aide d'un métal d'apport de soudure approprié qui est de préférence du type Inconel (dénomination commerciale).

Ainsi, la présente invention fournit un procédé de détection de défauts comme décrit dans la revendication 1.

Selon une caractéristique préférée du procédé selon l'invention, on émet en incidence directe et on détecte seulement le premier écho réfléchi.

Selon une autre caractéristique préférentielle du procédé de l'invention, on émet simultanément des ondes ultrasonores transversales au voisinage du point d'émission des ondes ultrasonores longitudinales pour localiser précisément des défauts avant et/ou au niveau de la première interface.

Selon un mode de réalisation particulièrement avantageux de l'invention, on émet les ondes ultrasonores longitudinales précitées sous un angle d'incidence de 60 ± 3° par rapport à la perpendiculaire à la surface de contact.

De préférence, selon le procédé de l'invention, on émet des ondes ultrasonores longitudinales de fréquence comprise entre 1 et 6 MHz, de préférence entre 2 et 6 MHz et encore de préférence d'environ 5 MHz.

D'autre part, avantageusement, les ondes ultrasonores transversales ont une fréquence comprise entre 1 et 6 MHz, de préférence entre 2 et 6 MHz et encore de préférence d'environ 4 MHz. De préférence, ces ondes ultrasonores transversales ont un angle d'incidence voisin ou égal à l'angle de chanfrein, de préférence égal à 45° ; ou ont un angle d'incidence de 60° environ.

Selon une autre caractéristique du procédé selon l'invention, on émet les ondes ultrasonores précitées par intermittence à l'aide d'éléments piézoélectriques et de préférence en métabionate, ce qui permet de les faire fonctionner alternativement en élément émetteur et en élément récepteur.

D'autre part, selon une caractéristique particulièrement intéressante du procédé de l'invention, on prend en compte la hauteur du premier écho réfléchi de manière à déterminer les dimensions des défauts, que l'on compare de préférence à un écho de référence servant d'étalon.

Le procédé selon l'invention est particulièrement adapté au contrôle des joints soudés en T réalisés en acier à structure austénitique, comme les aciers comprenant 5 à 10 % de nickel ainsi que tout type d'acier inoxydable dans le cas où les conditions d'accessibilité sont réduites comme c'est par exemple le cas dans la construction de réservoirs de stockage notamment de gaz liquéfié qui comprennent une robe raccordée au fond par la formation de joints soudés en T et dont il est impossible d'effectuer un contrôle de l'interface entre le fond et le métal d'apport en dessous du fond.

Le procédé selon l'invention permet de détecter les défauts internes ou proches de la surface, certains défauts de surface colmatés par le meulage entre-passe, de vérifier la qualité globale de l'assemblage, le joint achevé et notamment en service. Le procédé selon l'invention est d'une fiabilité constante et permet des cadences de contrôle élevées.

D'autre part, comme précédemment indiqué, le procédé selon l'invention permet de détecter des défauts internes situés avant, à, ou après l'interface métal de base/métal d'apport grâce à l'aptitude des ondes ultrasonores longitudinales à traverser l'interface métal de base/métal d'apport.

D'autre part, les ondes ultrasonores longitudinales donnent lieu à une déviation, une diffusion et une variation minimum dans la structure du métal d'apport en permettant ainsi une localisation précise des défauts.

Par ailleurs, la combinaison des ondes ultrasonores longitudinales avec des ondes ultrasonores transversales permet de déterminer avec une grande précision si les défauts se situent avant ou au niveau de l'interface métal de base/métal d'apport.

D'autres buts, caractéristiques et avantages de l'invention apparaîtront à la lumière de la description explicative qui va suivre faite en référence aux dessins annexés dans lesquels :

La figure 1 représente en coupe deux pièces soudées en T par un métal d'apport de manière à montrer un exemple de joints soudés en T.

La figure 2 représente la jonction de deux pièces en T à l'aide d'une cale étalon comportant des trous étalons permettant de déterminer un écho de référence pour la mise en œuvre du procédé selon l'invention.

La figure 3 est une vue latérale de la cale étalon de la figure 2 montrant le positionnement des trous étalons formant des fissures étalons.

La figure 4 représente une vue selon la flèche IV de la figure 3 montrant en outre une pièce étalon permettant de vérifier l'angle d'incidence des ondes ultrasonores.

La figure 5 représente l'écho réfléchi par la présence d'un trou latéral à la première interface métal de base/métal d'apport, et

La figure 6 représente un exemple d'écho réfléchi par la présence d'un trou central réalisé au niveau de la deuxième interface métal de base/métal d'apport.

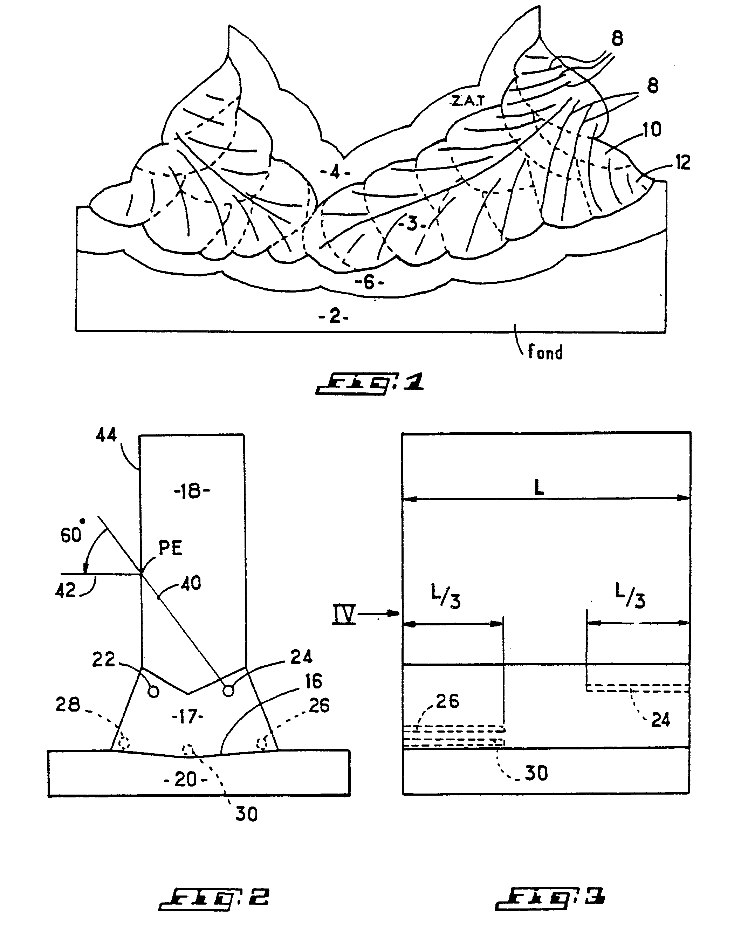

En référence à la figure 1 on a représenté schématiquement la liaison entre une première pièce 1 et une deuxième pièce 2 par l'intermédiaire d'une soudure 3.

Par exemple, la première pièce 1 peut constituer la robe d'un réservoir de stockage de gaz naturel liquéfié et la pièce 2 le fond dudit réservoir qui sont soudées sensiblement perpendiculairement entre elles.

On peut observer qu'à la zone de liaison entre le métal de base de la première pièce 1 et le métal de base de la deuxième pièce 2 une première interface 4 et une deuxième interface 6 sont formées au cours de la soudure et constituent ce que l'on appelle techniquement des zones affectées thermiquement formant la transition entre le métal de base et le métal d'apport de la soudure proprement dite 3.

Dans le cas de l'application au réservoir de stockage de gaz naturel liquéfié, les métaux de base sont en acier. Il peut par exemple s'agir d'aciers contenant de 5 à 10 % de nickel et de préférence 9 % de nickel, tandis que le métal d'apport de soudure est par exemple un alliage type Inconel, comme représenté, de structure cristallographique austénitique donnant lieu à la présence de dendrites 8 représentés en trait fort. On a représenté en trait mixte schématiquement les limites de séparation entre des passes successives comme les passes 10, 12.

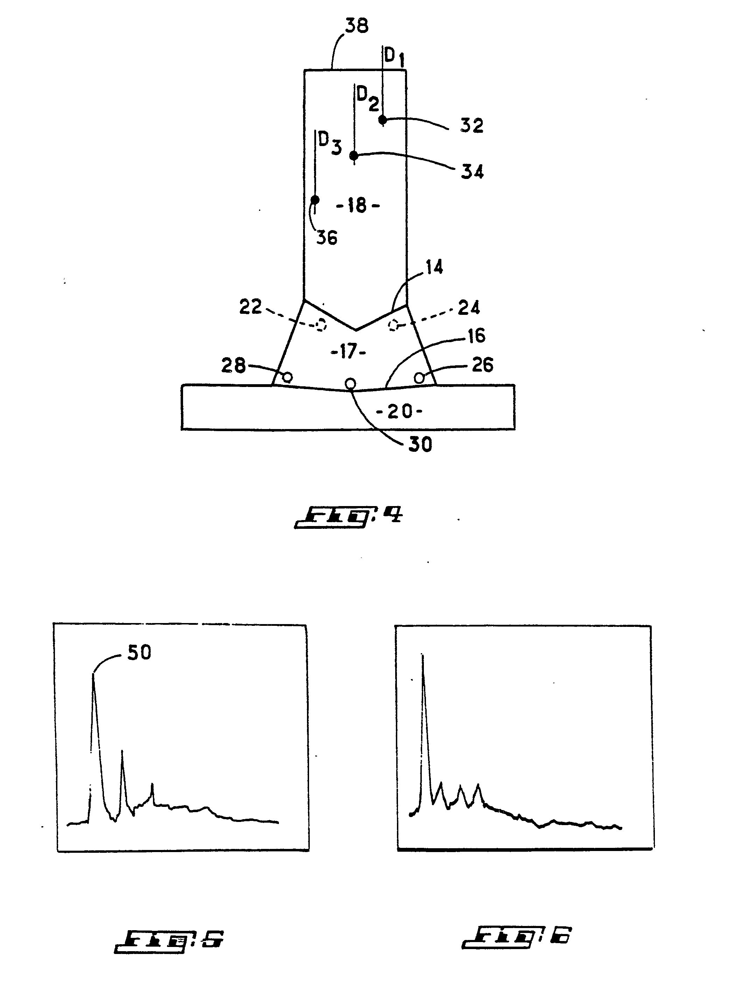

Pour détecter des défauts éventuellement présents dans le métal de base de la première pièce au niveau de la zone affectée thermiquement 4 ou 6 et/ou au bord ou dans la soudure proprement dite, on prépare une cale étalon représentée à la figure 2 et qui comporte divers trous étalons comme cela est clairement visible aux figures 2 à 4.

On prépare plusieurs cales étalons, chacune comportant des trous d'un diamètre identique, par exemple 1, 5, 3 ou 6 mm de diamètre.

La profondeur est également prédéterminée et peut par exemple être égale au tiers de la longueur L de la première pièce étalon 18 soudée perpendiculairement à la deuxième pièce étalon 20.

Les trous de référence sont percés par exemple depuis l'extérieur comme cela est clairement visible à partir des figures 2 à 4.

Par exemple, la cale étalon 17 comporte en dessous de la première interface 14 deux trous latéraux d'interface respectivement 22, 24 et avant la deuxième interface 16 deux trous latéraux respectivement repérés 26, 28 et un trou central repéré 30.

On peut également réaliser des trous étalons dans la pièce étalon 18 tels que les trous 32, 34, 36 réalisés à des distances respectivement D1, D2, D3 de l'extrémité supérieure 38 de la pièce étalon 18.

La présence des trous étalons 32, 34, 36 dans la pièce étalon 18 a pour but de vérifier l'angle d'incidence correct d'émission de l'onde ultrasonore.

Ainsi, avec la cale étalon 17 et les pièces étalons 18, 20 soudées ensemble, on obtient par le procédé selon l'invention précité, comportant l'émission d'ondes ultrasonores longitudinales telles que l'onde ultrasonore 40 schématisée à la figure 2 émise depuis le point d'émission P.E. selon un angle d'incidence de 60° par rapport à la perpendiculaire 42 à la surface ou paroi de contact 44 de la pièce étalon 18, un écho réfléchi au point d'emission PE représenté à la figure 5 dont le premier écho 50 est fourni par le signal sonore renvoyé par le trou latéral 24.

Comme la vitesse de propagation de l'onde ultrasonore longitudinale est connue, par exemple 5 750 m/s, sa fréquence étant de 5 MHz, on connaît également à·quel moment sera perçu ce premier écho.

On peut donc obtenir successivement un étalonnage précis du positionnement des défauts ainsi que de leurs dimensions par prise en compte de la hauteur du premier écho réfléchi.

Toutes ces données recueillies à partir de la cale étalon 17 de référence peuvent être stockées sur mémoire par exemple de micro-ordinateur, de sorte que, lorsque l'on voudra détecter des défauts, tels que des fissures dans un métal d'apport 3 entre deux pièces 1 et 2, destinées par exemple à constituer la robe et le fond d'un réservoir de stockage naturel liquéfié, on détecte au point d'émission l'écho réfléchi au cours du temps et on compare cet écho avec l'écho de référence pour déterminer la présence ou l'absence de défauts dans le métal de base et/ou dans le métal d'apport et/ou au niveau de la première interface 14 ou 4 de la deuxième interface 16 ou 6.

Il est à noter que c'est la présence d'un défaut qui réfléchit l'onde ultrasonore longitudinale, de sorte qu'en l'absence d'un défaut tel qu'une fissure, l'onde ultrasonore longitudinale n'est pas réfléchie.

On a représenté à la figure 6 l'écho réfléchi obtenu avec le trou central de référence 30 ayant un diamètre de 1,5 mm. Cet écho est de 76dB en gain.

Comme indiqué précédemment, de préférence selon l'invention, simultanément à l'émission de l'onde ultrasonore longitudinale sous un angle d'incidence de 60° ± 3° par rapport à la perpendiculaire à la surface de contact, on émet des ondes ultrasonores transversales au voisinage du point d'émission P.E. des ondes ultrasonores longitudinales pour localiser précisément les défauts avant et/ou à la première interface 14 ou 4. En effet, les ondes ultrasonores transversales ont la particularité de ne pas traverser la première interface.

Ainsi, si un défaut est présent avant la première interface, c'est-à-dire dans la première zone affectée thermiquement ou à la limite de la soudure 3, l'écho réfléchi de l'onde ultrasonore transversale le sera de manière correspondante à celui de l'onde ultrasonore longitudinale et il sera ainsi possible de le localiser précisément.

Comme indiqué précédemment, l'onde ultrasonore transversale a de préférence une fréquence comprise entre 1 et 6 MHz, de préférence entre 2 et 6 MHz et encore de préférence d'environ 4 MHz et un angle d'incidence voisin ou égal à l'angle de chanfrein, de préférence égal à 45°. Cet angle d'incidence peut également être de 60°.

Pour contrôler tout le volume du métal d'apport 3 et des zones thermiquement affectées 4 et 6, et pour gagner du temps, on émet simultanément une pluralité d'ondes ultrasonores longitudinales selon l'angle d'incidence de 60°.

Avantageusement, selon le procédé de l'invention, on contrôle une zone précise de métal de base, d'interface et/ou de métal d'apport en ne détectant l'écho réfléchi que pendant un laps de temps prédéterminé. En effet, étant donné que l'on sait le temps que mettra l'onde ultrasonore pour atteindre la zone précise à contrôler et pour en revenir, il suffit de détecter l'écho réfléchi au voisinage de ce laps de temps prédéterminé et en présence d'un écho on saura qu'il y a effectivement un défaut.

Etant donné que le signal est pratiquement réfléchi à 90 % par le premier défaut, il suffit de détecter le premier écho réfléchi et donc selon l'invention on détecte de préférence seulement le premier écho réfléchi.

On comprend donc que le procédé selon l'invention est simple, d'une fiabilité constante. D'autre part, les ondes ultrasonores selon l'invention, longitudinales ou même transversales sont habituellement émises en incidence directe, comme représenté à la figure 2, ce qui permet de limiter les phénomènes de déviation et de diffusion de l'onde ultrasonore, de limiter les conversions d'ondes en ne prenant en compte que le premier écho réfléchi.

D'autre part, la sensibilité de détection obtenue par la mise en œuvre des ondes ultrasonores longitudinales selon l'invention, de préférence combinées à des ondes ultrasonores transversales permet de localiser précisément par rapport au ressuage de nouveaux défauts préjudiciables et constitue donc un progrès technique radical.

L'invention comprend naturellement tous les moyens constituant des équivalents techniques des moyens décrits ainsi que leurs diverses combinaisons.

**Revendications**

1. Procédé de détection de défauts de part et d'autre de chaque interface métal de base/métal d'apport formée par la soudure d'une première pièce (1) métallique à une deuxième pièce métallique (2), notamment de joints soudés en T réalisés en acier à structure austénite, comprenant l'émission d'ondes ultrasonores longitudinales (40) sur la paroi ou surface de l'une desdites pièces, en direction de l'interface (4, 6) à contrôler, la détection de l'écho réfléchi et l'utilisation d'échantillons comportant des discontinuités à des emplacements prédéterminés pour l'appréciation des échos, caractérisé en ce que l'on détecte l'écho réfléchi sensiblement au point d'émission (PE) des ondes ultrasonores longitudinales (40), compare un écho réfléchi à un écho de référence préalablement établi à l'aide d'un joint étalon (17, 18, 20) correspondant au joint à contrôler et comprenant des trous étalons (22, 24, 26, 28, 30) prédéterminés, au voisinage de ladite interface et servant à la production des échos de référence différents des échos produits par l'interface et en ce que l'on ne détecte l'écho réfléchi que pendant le laps de temps déterminé par l'écho de référence.

2. Procédé selon la revendication 1, caractérisé en ce qu'on émet en incidence directe et on détecte seulement le premier écho réfléchi.

3. Procédé selon la revendication 1 ou 2, caractérisé en ce qu'on émet simultanément des ondes ultrasonores transversales au voisinage du point d'émission (PE) des ondes ultrasonores longitudinales (40) pour localiser précisément des défauts avant et/ou au niveau de la première interface (14).

4. Procédé selon l'une des revendications 1 à 3, caractérisé en ce qu'on émet les ondes ultrasonores longitudinales précitées sous un angle d'incidence de 60 ± 3° par rapport à la perpendiculaire à la surface de contact.

5. Procédé selon l'une des revendications 1 à 4, caractérisé en ce qu'on émet des ondes ultrasonores longitudinales (40) de fréquence comprise entre 1 et 6 MHz, avantageusement entre 2 et 6 MHz ou d'environ 5 MHz.

6. Procédé selon l'une des revendications 3 à 5, caractérisé en ce que les ondes ultrasonores transversales ont une fréquence comprise entre 1 et 6 MHz, avantageusement entre 2 et 6 MHz ou d'environ 4 MHz et ont un angle d'incidence voisin ou égal à l'angle de chanfrein, avantageusement égal à 45° ; ou ont un angle d'incidence de 60° environ.

7. Procédé selon l'une quelconque des revendications 1 à 6, caractérisé en ce qu'on émet les ondes ultrasonores précitées par intermittence à l'aide d'éléments piézoélectriques de préférence en métabionate.

8. Procédé selon l'une quelconque des revendications précédentes, caractérisé en ce que la première (1) et la deuxième pièce (2) précitées sont en acier à structure austénitique ou dendritique comprenant de préférence de 5 à 10 % de nickel.

9. Procédé selon l'une quelconque des revendications précédentes, caractérisé en ce qu'on prend en compte la hauteur du premier écho réfléchi de manière à déterminer les dimensions des défauts, que l'on compare à un écho de référence (50) servant d'étalon.

**Claims**

1. Method of detecting defaults on both sides of each parent metal/filler metal interface formed by the welding of a first metallic piece (1) on another metallic piece (2), in particular of T-shaped welded joints made of steel with an austenitic structure, comprising the emission of longitudinal ultrasonic waves (40) on the wall or surface of one of the said pieces, towards the interface (4, 6) to be checked, the detection of the echo return and the use of samples comprising discontinuities at predetermined locations for the evaluation of the echoes, characterized in that the echo return is detected substantially at the point of emission (PE) of the longitudinal ultrasonic waves (40), an echo return is compared with a pre-established reference echo with the aid of a standard joint (17, 18, 20) corresponding to the joint to be checked and comprising predetermined standard holes (22, 24, 26, 28, 30) near the said interface and useful for the production of reference echoes different from the echoes produced by the interface and in that the echo return is detected only during the lapse of time determined by the reference echo.

2. Method according to claim 1, characterized in that the emission is performed with direct incidence and in that the first echo return only is detected.

3. Method according to claim 1 or 2, characterized in that transversal ultrasonic waves are emitted simultaneously near the point of emission (PE) of the longitudinal ultrasonic waves (40) to locate precisely defaults before and/or at the first interface (14).

4. Method according to one of claims 1 to 3, characterized in that the aforesaid longitudinal ultrasonic waves are emitted under an angle of incidence of 60 ± 3° with respect to the perpendicular to the surface of contact.

5. Method according to one of claims 1 to 4, characterized in that longitudinal ultrasonic waves (40) with a frequency comprised between 1 and 6 MHz, advantageously between 2 and 6 MHz or of about 5 MHz are emitted.

6. Method according to one of claims 3 to 5, characterized in that the transversal ultrasonic waves have a frequency comprised between 1 and 6 MHz, advantageously between 2 and 6 MHz or of about 4 MHz and have an angle of incidence near or equal to the angle of the bezel, advantageously equal to 45° ; or have an angle of incidence of about 60°.

7. Method according to any of claims 1 to 6, characterized in that the aforesaid ultrasonic waves are emitted intermittently with the aid of piezoelectric elements preferably formed of metabionate.

8. Method according to any of the preceding claims, characterized in that the first (1) and the second (2) aforesaid pieces are made of steel with an austenitic or dendritic structure comprising preferably 5 to 10 % nickel.

9. Method according to any of the preceding claims, characterized in that the height of the first echo return is taken into account so as to determine the dimensions of the defaults, which is compared to a reference echo (50) used as a standard.

**Patentansprüche**

1. Verfahren zur Feststellung von Fehlerstellen auf beiden Seiten jeder von dem Schweißen eines ersten metallischen Teils (1) an einem zweiten metallischen Teil (2) gebildeten Grundmetall/Zusatzmetallgrenzfläche, insbesondere von T-Schweißverbindungen aus Stahl mit austenitischer Struktur, wobei das Verfahren die Emission von Längsultraschallwellen (40) auf die Wand oder Fläche eines der besagten Teile, in Richtung der zu überprüfenden Grenzfläche (4, 6), die Erfassung der Echorückstrahlung und die Verwendung von Diskontinuitäten in vorbestimmten Stellen aufweisenden Proben zur Bewertung der Echos umfaßt, dadurch gekennzeichnet, daß die Echorückstrahlung im wesentlichen in der Emissionsstelle (PE) der Längsultraschallwellen (40) erfaßt wird, daß eine Echorückstrahlung mit einem an Hand einer Normalverbindung (17, 18, 20) vorbestimmten Normalecho verglichen wird, wobei die Normalverbindung der zu überprüfenden Verbindung entspricht und vorbestimmte Normallöcher (22, 24, 26, 28, 30) in der Nähe der besagten Grenzfläche aufweist, die zur Erzeugung von den sich von den von der Grenzfläche erzeugten Echos unterscheidenden Normalechos gebraucht werden, und daß die Echorückstrahlung nur während der vom Normalecho bestimmten Zeitspanne erfaßt wird.

2. Verfahren nach Anspruch 1, dadurch gekennzeichnet, daß man mit direktem Einfall emittiert und daß man nur die erste Echorückstrahlung erfaßt.

3. Verfahren nach Anspruch 1 oder 2, dadurch gekennzeichnet, daß man gleichzeitig Querultraschallwellen in der Nähe der Emissionsstelle (PE) der Längsultraschallwellen (40) emittiert, zur präzisen Lokalisierung der vor und/oder an der ersten Grenzfläche (14) liegenden Fehlerstellen.

4. Verfahren nach einem der Ansprüche 1 bis 3, dadurch gekennzeichnet, daß man die besagten Längsultraschallwellen unter einem Einfallwinkel von 60 ± 3° in Bezug auf die Senkrechte zur Kontaktfläche emittiert.

5. Verfahren nach einem der Ansprüche 1 bis 4, dadurch gekennzeichnet, daß man Längsultraschallwellen (40) mit einer Frequenz zwischen 1 und 6 MHz, vorzugsweise zwischen 2 und 6 MHz oder von ungefähr 5 MHz emittiert.

6. Verfahren nach einem der Ansprüche 3 bis 5, dadurch gekennzeichnet, daß die Querultraschallwellen eine Frequenz zwischen 1 und 6 MHz, vorzugsweise zwischen 2 und 6 MHz oder von ungefähr 4 MHz und einen Einfallwinkel in der Nähe von oder gleich dem Phasenwinkel, vorzugsweise von 45° aufweisen ; oder einen Einfallwinkel von ca. 60° aufweisen.

7. Verfahren nach einem der Ansprüche 1 bis 6, dadurch gekennzeichnet, daß man die besagten Ultraschallwellen intermittierend emittiert an Hand von piezoelektrischen Elementen, vorzugsweise aus Metabionat.

8. Verfahren nach einem der vorangehenden Ansprüche, dadurch gekennzeichnet, daß das besagte erste Teil (1) und das besagte zweite Teil (2) aus Stahl mit austenitischer oder dendritischer Struktur, vorzugsweise mit 5 bis 10 % Nickel sind.

9. Verfahren nach einem der vorangehenden Ansprüche, dadurch gekennzeichnet, daß die Höhe der ersten Echorückstrahlung in Kauf genommen wird zur Bestimmung der Masse der Fehlerstellen, die man mit einem als Normalmaß dienenden Normalecho (50) vergleicht.

_FIG. 1_

_FIG. 2_

_FIG. 3_

_FIG. 4_

_FIG. 5_

_FIG. 6_